# EUROPEAN PATENT SPECIFICATION

(11) **EP 1 891 123 B1**
(45) Date of publication and mention of the grant of the patent: **29.08.2018**
(21) Application number: 06763558.1
(22) Date of filing: 07.06.2006
(51) Int. Cl.: C08F 210/06, C08F 4/6592

(54) **PROCESS FOR THE COPOLYMERIZATION OF PROPYLENE**
VERFAHREN ZUR COPOLYMERISATION VON PROPYLEN
PROCEDE DE COPOLYMERISATION DE PROPYLENE

(30) Priority: 13.06.2005 EP 05105137; 15.06.2005 US 690629 P
(43) Date of publication of application: 27.02.2008
(73) Proprietor: Basell Polyolefine GmbH, 50389 Wesseling (DE)
(72) Inventor: RESCONI, Luigi, I-44100 Ferrara (IT); CIACCIA, Eleonora, I-44100 Ferrara (IT); FOCANTE, Francesca, I-60024 Filottrano (IT)
(74) Representative: Sacco, Marco
(86) International application number: PCT/EP2006/062964
(87) International publication number: WO 2006/134046

(56) References cited:
- EP-B1- 1 858 907
- WO-A-01/48034
- WO-A-03/045551
- WO-A-2004/106351
- WO-A-2005/023889
- WO-A-2005/058916
- WO-A-2006/065809

## Description

The present invention relates to a process for the preparation of isotactic copolymers of propylene and at least ethylene or an alpha olefin of formula CH₂=CHT wherein T is a C₂-C₂₀ alkyl radical carried out in solution. Said process being carried out by using a particular class of metallocene-based catalyst system.

Process for the copolymerization of propylene by using metallocene catalyst system are already known in the art. For example in EP 629 632 a series of solution polymerization examples are described. However this document describes a bridged bis indenyl metallocene-based catalyst system wherein the indenyl groups are substituted only in positions 2 and 4. Moreover the polymerization results can be still improved.

WO 03/050131 describes a class of bridged bis indenyl metallocene compounds wherein the indenyl moieties are substituted at least in positions 2, 4 and 5. In this document about 100 pages are used to list example of compounds included in the general formula, al these compounds are bridged bis indenyl metallocene compounds substituted in positions 2, 4 and 5. WO 03/050131 states that this class of metallocene compounds can be used for every kind of polymerization process including solution polymerizations, however all the examples are directed to slurry polymerization process.

WO 03/045551 describes a class of bridged bis indenyl metallocene compounds such as Me₂Si(2-ⁱPr-4-(p-^{t}Bu-Ph)-l-Ind)(2,5,6,7-Me₄-4-(p-ⁱBu-Ph)-1-Ind)ZrCI₂ used in propylene ethylene random copolymerization.

PCT/EP2004/013827 a class of bis indenyl metallocene compounds wherein the indenyl moieties are substituted in position 5 and 6 by a condensed ring is disclosed. PCT/EP2004/013827 is mainly focused on C₁ symmetric structures and there are no explicit disclosures of C₂ symmetric compounds. In other words this document is focused on metallocene compounds comprising two cyclopentadienyl moieties having different substitution patterns.

Therefore there is the need to find a catalyst system able to give propylene copolymers having high molecular weight in high yields and that can be used at temperatures of industrial interest in a solution polymerization process.

An object of the present invention is a solution polymerization process comprising contacting under polymerization conditions propylene and at least ethylene or an alpha olefin of formula CH₂=CHT wherein T is a C₂-C₂₀ alkyl radical, in the presence of a catalyst system obtainable by contacting:
a) at least a metallocene compound of formula (I) 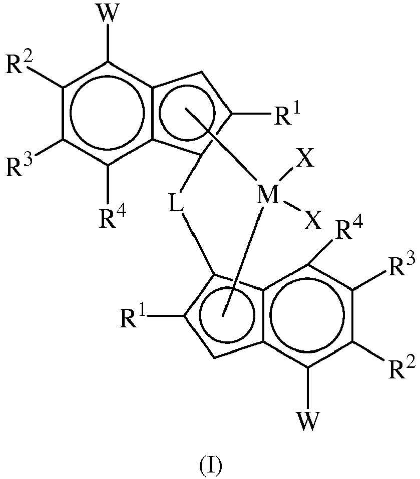
b) alumoxane or a compound capable of forming an alkyl metallocene cation; and optionally
c) an organo aluminum compound;
   wherein in the metallocene compound of formula (I):
   M is an atom of a transition metal selected from those belonging to group 3, 4, or to the lanthanide or actinide groups in the Periodic Table of the Elements; preferably M is zirconium, titanium or hafnium;
   X, equal to or different from each other, is a hydrogen atom, a halogen atom, a R, OR, OR'O, OSO₂CF₃, OCOR, SR, NR₂ or PR₂ group wherein R is a linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radical; optionally containing heteroatoms belonging to groups 13-17 of the Periodic Table of the Elements; and R' is a C₁-C₂₀-alkylidene, C₆-C₂₀-arylidene, C₇-C₂₀-alkylarylidene, or C₇-C₂₀-arylalkylidene radical; preferably X is a hydrogen atom, a halogen atom, a OR'O or R group; more preferably X is chlorine or a methyl radical;
   L is a divalent bridging group selected from C₁-C₂₀ alkylidene, C₃-C₂₀ cycloalkylidene, C₆-C₂₀ arylidene, C₇-C₂₀ alkylarylidene, or a C₇-C₂₀ arylalkylidene radicals, optionally containing heteroatoms belonging to groups 13-17 of the Periodic Table of the Elements, or it is a silylidene radical containing up to 5 silicon atoms; preferably L is Si(R₁₁)₂ wherein R₁₁ is a linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radical ; more preferably L is Si(CH₃)₂ or SiPh₂;
   R₁ is a linear C₁-C₄₀ hydrocarbon radical optionally containing heteroatoms belonging to groups 13-17 of the Periodic Table of the Elements such as methyl or ethyl radical; preferably R₁ is a linear C₁-C₂₀-alkyl, C₂-C₄₀ alkenyl, C₂-C₄₀ alkynyl radical, optionally containing heteroatoms belonging to groups 13-17 of the Periodic Table of the Elements; preferably R₁ is a linear C₁-C₁₀-alkyl radical; more preferably R₁ is a methyl, or ethyl radical;
   R₂ and R₃, equal to or different from each other, are C₁-C₄₀ hydrocarbon radicals optionally containing heteroatoms belonging to groups 13-17 of the Periodic Table of the Elements or R₂ and R₃, are part of 4-7 membered ring condensed to the benzene ring of the indenyl moiety said ring optionally containing heteroatoms belonging to groups 13-17 of the Periodic Table of the Elements; the valence of each atom forming said ring being substituted with R₁₈ radicals; that means that it is filled with R₁₈ groups, wherein R₁₈, equal to or different from each other, are hydrogen atoms or a C₁-C₂₀ hydrocarbon radical; preferably R₁₈ is a hydrogen atom or a linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radical, optionally containing one or more heteroatoms belonging to groups 13-17 of the Periodic Table of the Elements; more preferably R₁₈ is a hydrogen atom or a linear or branched, C₁-C₂₀-alkyl radical; more preferably R₁₈ is a hydrogen atom or a methyl or ethyl radical; said ring can be saturated or it can contain double bonds; preferably R₂ and R₃, equal to or different from each other, are linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radical optionally containing heteroatoms belonging to groups 13-17 of the Periodic Table of the Elements or R₂ and R₃ are part of a 5 or 6 membered ring; said ring optionally containing heteroatoms belonging to groups 13-16 of the Periodic Table of the Elements preferably groups 15-16 of the Periodic Table of the Elements; the valence of each atom forming said ring being substituted with R¹⁸ radicals; as described above; preferably R² and R³, are C₁-C₂₀ alkyl radicals or form together a condensed saturated 3-7 membered ring;
   R⁴ is a hydrogen atom or a C₁-C₄₀ hydrocarbon radical optionally containing heteroatoms belonging to groups 13-17 of the Periodic Table of the Elements; preferably R⁴ is a hydrogen atom or a linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radical optionally containing heteroatoms belonging to groups 13-17 of the Periodic Table of the Elements; preferably R⁴ is a hydrogen atom a C₁-C₁₀-alkyl or a C₆-C₄₀-aryl radical;
   W is an aromatic 5 or 6 membered ring that can contain heteroatoms belonging to groups 15-16 of the Periodic Table of the Elements; the valence of each atom of said ring is substituted with hydrogen atom or it can optionally be substituted with R⁵ groups, wherein R⁵, equal to or different from each other, are C₁-C₄₀ hydrocarbon radicals optionally containing heteroatoms belonging to groups 13-17 of the Periodic Table of the Elements; preferably R⁵, are linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radicals optionally containing heteroatoms belonging to groups 13-17 of the Periodic Table of the Elements;
      Preferably W is selected from the group comprising the following moieties of formula (Wa), (Wb) and (Wc): 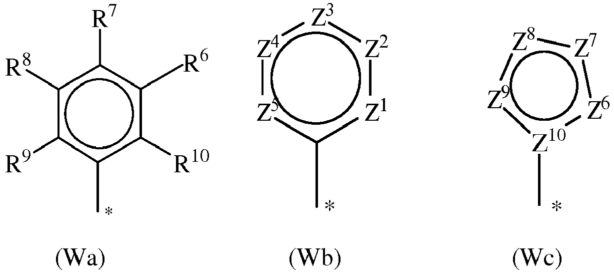 wherein the * represents the point in which the moiety bounds the indenyl moiety of the compound of formula (I);
   R⁶, R⁷, R⁸, R⁹ and R¹⁰, equal to or different from each other, are hydrogen atoms or C₁-C₄₀ hydrocarbon radicals optionally containing heteroatoms belonging to groups 13-17 of the Periodic Table of the Elements; preferably R⁶, R⁷, R⁸, R⁹ and R¹⁰, are hydrogen atoms or linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radicals optionally containing heteroatoms belonging to groups 13-17 of the Periodic Table of the Elements;
   Z¹ is a nitrogen atom or a CR¹⁰ group; Z² is a nitrogen atom or a CR⁶ group; Z³ is a nitrogen atom or a CR⁷ group; Z⁴ is a nitrogen atom or a CR⁸ group; Z⁵ is a nitrogen atom or a CR⁹ group; provided that not more that 2 groups among Z¹, Z², Z³, Z⁴ and Z⁵ are nitrogen atoms, preferably not more that one group among Z¹, Z², Z³, Z⁴ and Z⁵ is a nitrogen atom;
   Z⁶ is an oxygen atom, a sulfur atom, a NR¹³ group or a CR¹³ group; Z⁷ is an oxygen atom, a sulfur atom, a NR¹⁴ group or a CR¹⁴ group; Z⁸ is an oxygen atom, a sulfur atom, a NR¹⁵ group or a CR¹⁵ group; Z⁹ is an oxygen atom, a sulfur atom, a NR¹⁶ group or a CR¹⁶ group; Z¹⁰ is a nitrogen atom or a carbon atom that bonds the indenyl moiety of the structure of formula (I); with the proviso that not more than 1 group among Z⁶, Z⁷, Z⁸, Z⁹ or Z¹⁰ is a sulfur atom, an oxygen atom or a nitrogen-containing group atom selected from NR¹³, NR¹⁴, NR¹⁵, NR¹⁶, and a nitrogen atom;
   R¹³, R¹⁴, R¹⁵ and R¹⁶, equal to or different from each other, are hydrogen atoms or C₁-C₄₀ hydrocarbon radicals optionally containing heteroatoms belonging to groups 13-17 of the Periodic Table of the Elements; preferably R⁶, R⁷, R⁸, R⁹ and R¹⁰, are hydrogen atoms or linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radicals optionally containing heteroatoms belonging to groups 13-17 of the Periodic Table of the Elements; more preferably R⁶, R⁷, R⁸, R⁹ and R¹⁰ are hydrogen atoms, C₁-C₄₀-alkyl or C₆-C₄₀-aryl radicals;
      In the moiety of formula (Wa), in a preferred embodiment, R⁷ is a C₁-C₄₀-alkyl radical, preferably a branched C₁-C₄₀-alkyl radical such as a tertbutyl radical, more preferably R⁷ is a branched C₁-C₄₀-alkyl radical wherein the carbon atom in position alpha is a tertiary carbon atom and R⁶, R⁸, R⁹ and R¹⁰ are hydrogen atoms;
      in a further preferred embodiment R¹⁰ and R⁸ are C₁-C₄₀-alkyl radicals, preferably they are linear C₁-C₄₀ alkyl radicals such as methyl radicals and R⁷ and R⁹ are hydrogen radicals;
      in a further preferred embodiment R⁶, R⁷ and R⁸ are linear or branched C₁-C₄₀-alkyl radicals such as methyl or tertbutyl radicals and R¹⁰ and R⁹ are hydrogen atoms;
      in a further preferred embodiment R⁶, R⁷, R⁸, R⁹ and R¹⁰ are hydrogen atoms;
      in the moiety of formula (Wb), in a preferred embodiment, Z¹ is a nitrogen atom and Z², Z³, Z⁴ and Z⁵ are respectively CR⁶, CR⁷, CR⁸ and CR⁹ wherein the meaning of R⁶, R⁷, R⁸, and R⁹ is described above; in a further preferred embodiment Z³ is a nitrogen atom and Z¹, Z², Z⁴ and Z⁵ are respectively CR¹⁰, CR⁶, CR⁸ and CR⁹ wherein the meaning of R¹⁰, R⁶, R⁸, and R⁹ is described above; in a further preferred embodiment Z² is a nitrogen atom and Z¹, Z³, Z⁴ and Z⁵ are respectively CR¹⁰, CR⁷, CR⁸ and CR⁹ wherein the meaning of R¹⁰, R⁷, R⁸, and R⁹ is described above;
      in the moiety of formula (Wc) in a preferred embodiment Z⁶ is an oxygen atom, a sulfur atom, a NR¹⁶ group; preferably it is a sulfur atom or a NR¹⁶; wherein R¹⁶ is preferably a C₁-C₄₀-alkyl radical; more preferably Z⁶ is a sulfur atom; and Z⁷, Z⁸, Z⁹ and Z¹⁰ are respectively a CR¹⁴, CR¹⁵, CR¹⁶ and a carbon atom, wherein R¹⁴ is a hydrogen atom or a C₁-C₄₀-alkyl radical such as methyl or ethyl; and R¹⁵ and R¹⁶ are hydrogen atoms or
      C₁-C₄₀-alkyl radicals.

A further preferred class of compounds of formula (I) has formula (IIa), (IIb), or (IIc):

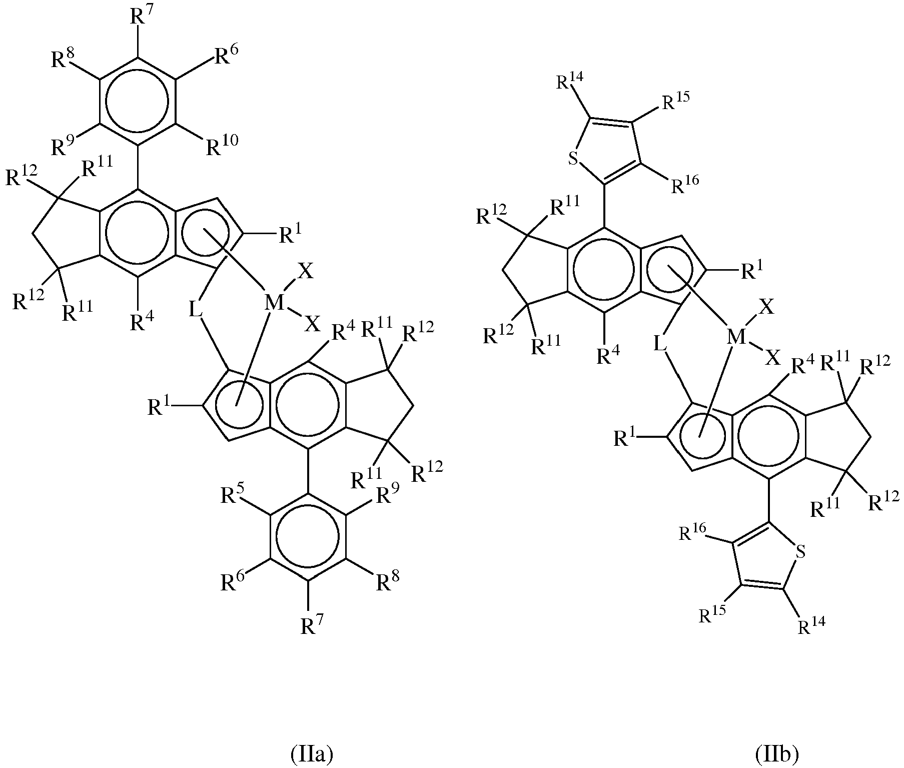

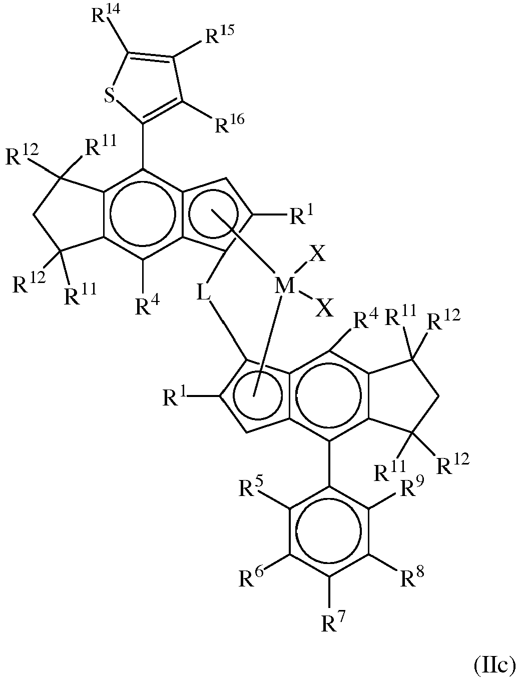

Wherein M, L, X, R¹, R⁴, R⁶, R⁷, R⁸, R⁹ and R¹⁰ have the meaning reported above and R¹¹ and R¹², equal to or different from each other, are hydrogen atoms or C₁-C₄₀ hydrocarbon radicals optionally containing heteroatoms belonging to groups 13-17 of the Periodic Table of the Elements; preferably R¹¹ and R¹² are hydrogen atoms or linear or branched, cyclic or acyclic, C₁-C₄₀-alkyl, C₂-C₄₀ alkenyl, C₂-C₄₀ alkynyl radicals, optionally containing heteroatoms belonging to groups 13-17 of the Periodic Table of the Elements; more preferably R¹¹ and R¹² are hydrogen atoms or C₁-C₁₀-alkyl radicals such as methyl or ethyl radicals.

Preferably the metallocene compounds of formula (I) have C₂ symmetry. Metallocene symmetry classes can be found on Resconi et al. Chemical Reviews, 2000, Vol. 100, No. 4 1263 and references herein cited.

Preferably the metallocene compounds to be used in the process of the present invention are in their racemic(rac) or racemic-like form. Racemic(rac) and racemic-like form are described in PCT/EP2005/052688.

Examples of compounds having formula (I) are as follows
Me₂Si(6-Me-4-Ph-1,2,3,5-tetrahydro-s-indacen-7-yl)₂ZrCl₂,
Me₂Si(6,8-Me2-4-Ph-1,2,3,5-tetrahydro-s-indacen-7-yl)₂ZrCl₂,
Me₂Si[6-Me-4-(4-t-BuPh)-1,2,3,5-tetrahydro-s-indacen-7-yl]₂ZrCl₂,
Me₂Si(6,8-Me2-4-(4-t-BuPh)-1,2,3,5-tetrahydro-s-indacen-7-yl)₂ZrCl₂,
Me₂Si[6-Me-4-(2-MePh)-1,2,3,5-tetrahydro-s-indacen-7-yl]₂ZrCl₂,
Me₂Si(6,8-Me2-4-(2-MePh)-1,2,3,5-tetrahydro-s-indacen-7-yl)₂ZrCl₂,
Me₂Si(1,1,3,3,6-Me5-4-(2-MePh)-1,2,3,5-tetrahydro-s-indacen-7-yl)₂ZrCl₂,
Me₂Si[6-Me-4-(2,5-Me2Ph)-1,2,3,5-tetrahydro-s-indacen-7-yl]₂ZrCl₂,
Me₂Si[6-Me-4-(4-biphenyl)-1,2,3,5-tetrahydro-s-indacen-7-yl]₂ZrCl₂,
Me₂Si(1,1,3,3,6-Me5-4-Ph-1,2,3,5-tetrahydro-s-indacen-7-yl)₂ZrCl₂,
Me₂Si[1,1,3,3,6-Me5-4-(4-tBuPh)-1,2,3,5-tetrahydro-s-indacen-7-yl]₂ZrCl₂,
Me₂Si(2,2,6-Me3-4-Ph-1,2,3,5-tetrahydro-s-indacen-7-yl)₂ZrCl₂,
Me₂Si(2-Me-4-Ph-1H-cyclopenta[b]naphthalen-1-yl)₂ZrCl₂,
Me₂Si(2,5,8-Me3-4-Ph-1H-cyclopenta[b]naphthalen-1-yl)₂ZrCl₂,
Me₂Si(2-Me-4-Ph-5,6,7,8-tetrahydro-1H-cyclopenta[b]naphthalen-1-yl)₂ZrCl₂,
Me₂Si(2,6-Me2-4-Ph-5H-1-thia-s-indacen-7-yl)₂ZrCl₂,
Me₂Si(2,3,6-Me3-4-Ph-5H-1-thia-s-indacen-7-yl)₂ZrCl₂,
Me₂Si(2,6-Me2-4-(4-t-BuPh)-5H-1-thia-s-indacen-7-yl)₂ZrCl₂,
Me₂Si(2,3,6-Me3-4-(4-t-BuPh)-5H-1-thia-s-indacen-7-yl)₂ZrCl₂,
Me₂Si(2-Me-4-Ph-1,5,6,7,8,9-hexahydrocyclohepta[f]inden-1-yl)₂ZrCl₂,
Me₂Si(6-Me-4-(2-benzothiophenyl)-1,2,3,5-tetrahydro-s-indacen-7-yl)₂ZrCl₂,
Me₂Si(6-Me-4-(2-(5-methylthiophenyl))-1,2,3,5-tetrahydro-s-indacen-7-yl)₂ZrCl₂,
Me₂Si(6-Me-4-(2-(5-methylfuryl))-1,2,3,5-tetrahydro-s-indacen-7-yl)₂ZrCl₂,
Me₂Si(6-Me-4-(4-pyridyl)-1,2,3,5-tetrahydro-s-indacen-7-yl)₂ZrCl₂,
C₂H₄(6-Me-4-Ph-1,2,3,5-tetrahydro-s-indacen-7-yl)₂ZrCl₂,
C₂H₄(6,8-Me2-4-Ph-1,2,3,5-tetrahydro-s-indacen-7-yl)₂ZrCl₂,
Ph₂Si(6-Me-4-Ph-1,2,3,5-tetrahydro-s-indacen-7-yl)₂ZrCl₂,
Ph₂Si(6,8-Me2-4-Ph-1,2,3,5-tetrahydro-s-indacen-7-yl)₂ZrCl₂
Me₂Si(6-Me-4-(2-(5-methylthiophenyl))-1,2,3,5-tetrahydro-s-indacen-7-yl) (6-Me-4-Ph-1,2,3,5-tetrahydro-s-indacen-7-yl)ZrCl₂
Me₂Si(6,8-Me2-4-Ph-1,2,3,5-tetrahydro-s-indacen-7-yl) (6-Me-4-(4-t-BuPh)-1,2,3,5-tetrahydro-s-indacen-7-yl) ZrCl₂
and their correspondent dimethyl derivatives.

The process of the present invention is preferably carried out at a temperature ranging from 60°C to 200°C, more preferably at a temperature ranging from 70°C to 150°C, even more preferably from 80°C to 120°C.

The alumoxanes used in the process according to the invention are considered to be linear, branched or cyclic compounds containing at least one group of the type: 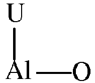 wherein the substituents U, same or different, are defined above.

In particular, alumoxanes of the formula: 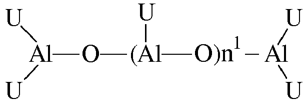 can be used in the case of linear compounds, wherein n¹ is 0 or an integer of from 1 to 40 and the substituents U are defined as above; or alumoxanes of the formula: 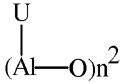 can be used in the case of cyclic compounds, wherein n² is an integer from 2 to 40 and the U substituents are defined as above.

Examples of alumoxanes suitable for use according to the present invention are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Particularly interesting cocatalysts are those described in WO 99/21899 and in WO01/21674 in which the alkyl and aryl groups have specific branched patterns.

Examples of aluminium compounds that can be reacted with water to give suitable alumoxanes (b), described in WO 99/21899 and WO01/21674, are:
tris(2,3,3-trimethyl-butyl)aluminium, tris(2,3-dimethyl-hexyl)aluminium, tris(2,3-dimethylbutyl)aluminium, tris(2,3-dimethyl-pentyl)aluminium, tris(2,3-dimethyl-heptyl)aluminium, tris(2-methyl-3-ethyl-pentyl)aluminium, tris(2-methyl-3-ethyl-hexyl)aluminium, tris(2-methyl-3-ethyl-heptyl)aluminium, tris(2-methyl-3-propyl-hexyl)aluminium, tris(2-ethyl-3-methylbutyl)aluminium, tris(2-ethyl-3-methyl-pentyl)aluminium, tris(2,3-diethyl-pentyl)aluminium, tris(2-propyl-3-methyl-butyl)aluminium, tris(2-isopropyl-3-methyl-butyl)aluminium, tris(2-isobutyl-3-methyl-pentyl)aluminium, tris(2,3,3-trimethyl-pentyl)aluminium, tris(2,3,3-trimethyl-hexyl)aluminium, tris(2-ethyl-3,3-dimethyl-butyl)aluminium, tris(2-ethyl-3,3-dimethyl-pentyl)aluminium, tris(2-isopropyl-3,3-dimethyl-butyl)aluminium, tris(2-trimethylsilyl-propyl)aluminium, tris(2-methyl-3-phenyl-butyl)aluminium, tris(2-ethyl-3-phenyl-butyl)aluminium, tris(2,3-dimethyl-3-phenyl-butyl)aluminium, tris(2-phenyl-propyl)aluminium, tris[2-(4-fluoro-phenyl)-propyl]aluminium, tris[2-(4-chloro-phenyl)-propyl]aluminium, tris[2-(3-isopropyl-phenyl)-propyl]aluminium, tris(2-phenyl-butyl)aluminium, tris(3-methyl-2-phenyl-butyl)aluminium, tris(2-phenyl-pentyl)aluminium, tris[2-(pentafluorophenyl)-propyl]aluminium,tris[2,2-diphenyl-ethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Amongst the above aluminium compounds, trimethylaluminium (TMA), triisobutylaluminium (TIBA), tris(2,4,4-trimethyl-pentyl)aluminium (TIOA), tris(2,3-dimethylbutyl)aluminium (TDMBA) and tris(2,3,3-trimethylbutyl)aluminium (TTMBA) are preferred.

Examples of compounds able to form an alkylmetallocene cation are compounds of formula D⁺E⁻, wherein D⁺ is a Brønsted acid, able to donate a proton and to react irreversibly with a substituent X of the metallocene of formula (I) and E⁻ is a compatible anion, which is able to stabilize the active catalytic species originating from the reaction of the two compounds, and which is sufficiently labile to be removed by an olefinic monomer. Preferably, the anion E⁻ comprises one or more boron atoms. More preferably, the anion E⁻ is an anion of the formula BAr₄⁽⁻⁾, wherein the substituents Ar which can be identical or different are aryl radicals such as phenyl, pentafluorophenyl or bis(trifluoromethyl)phenyl. Tetrakis-pentafluorophenyl borate is particularly preferred compound, as described in WO 91/02012. Moreover, compounds of formula BAr₃ can be conveniently used. Compounds of this type are described, for example, in the International patent application WO 92/00333. Other examples of compounds able to form an alkylmetallocene cation are compounds of formula BAr₃P wherein P is a substituted or unsubstituted pyrrol radical. These compounds are described in WO01/62764. Compounds containing boron atoms can be conveniently supported according to the description of DE-A-19962814 and DE-A-19962910. All these compounds containing boron atoms can be used in a molar ratio between boron and the metal of the metallocene comprised between 1:1 and 10:1; preferably 1:1 and 2.1; more preferably 1:1. Examples of compounds of formula D⁺E⁻ are:
Tributylammoniumtetra(pentafluorophenyl)aluminate,
Tributylammoniumtetra(trifluoromethylphenyl)borate,
Tributylammoniumtetra(4-fluorophenyl)borate,
N,N-Dimethylbenzylammonium-tetrakispentafluorophenylborate,
N,N-Dimethylhexylamonium-tetrakispentafluorophenylborate,
N,N-Dimethylaniliniumtetrakis(pentafluorophenyl)borate,
N,N-Dimethylaniliniumtetrakis(pentafluorophenyl)aluminate,
N,N-Dimethylbenzylammonium-tetrakispentafluorophenylborate,
N,N-Dimethylhexylamonium-tetrakispentafluorophenylborate,
Di(propyl)ammoniumtetrakis(pentafluorophenyl)borate,
Di(cyclohexyl)ammoniumtetrakis(pentafluorophenyl)borate,
Triphenylcarbeniumtetrakis(pentafluorophenyl)borate,
Triphenylcarbeniumtetrakis(pentafluorophenyl)aluminate,
Ferroceniumtetrakis(pentafluorophenyl)borate,
Ferroceniumtetrakis(pentafluorophenyl)aluminate.
Triphenylcarbeniumtetrakis(pentafluorophenyl)borate, and
N,N-Dimethylaniliniumtetrakis(pentafluorophenyl)borate.

Additional examples of compounds of formula D⁺E⁻ that can be used according to the present invention are described in WO 04/005360, WO 02/102811 and WO 01/62764.

Organic aluminum compounds used as compound c) are those of formula HⱼAlU₃₋ⱼ or HⱼAl₂U₆₋ⱼ as described above.

The catalyst system of the present invention can be prepared by contacting the metallocene of formula (I) and a suitable cocatalyst, in a solvent. The cocatalyst is preferably the reaction product of methylalumoxane and triisobutylaluminum.

The catalyst of the present invention can be prepared according to PCT/EP2005/002479 both by distilling off toluene or by following the described procedure but without such a distillation.

The catalysts of the present invention can also be supported on an inert carrier. This is achieved by depositing the metallocene compound a) or the product of the reaction thereof with the component b), or the component b) and then the metallocene compound a) on an inert support. The support can be a porous solid such as talc, a sheet silicate, an inorganic oxide or a finely divided polymer powder (e.g. polyolefin). Suitable inorganic oxides may be found among the oxides of elements of groups 2, 3, 4, 5, 13, 14, 15 and 16 of the Periodic Table of the Elements. Examples of oxides preferred as supports include silicon dioxide, aluminum oxide, and also mixed oxides of the elements calcium, aluminum, silicon, magnesium or titanium and also corresponding oxide mixtures, magnesium halides, styrene/divinylbenzene copolymers, polyethylene or polypropylene. Other inorganic oxides which can be used alone or in combination with the abovementioned preferred oxidic supports are, for example, MgO, ZrO₂, TiO₂ or B₂O₃.

A suitable class of supports which can be used is that constituted by porous organic supports functionalized with groups having active hydrogen atoms. Particularly suitable are those in which the organic support is a partially crosslinked styrene polymer. Supports of this type are described in European application EP-633 272.

Another class of inert supports particularly suitable for use according to the invention is that of polyolefin porous prepolymers, particularly polyethylene.

A further suitable class of inert supports for use according to the invention is that of porous magnesium halides such as those described in International application WO 95/32995.

The support materials used preferably have a specific surface area in the range from 10 to 1 000 m²/g, a pore volume in the range from 0.1 to 5 ml/g and a mean particle size of from 1 to 500 µm. Preference is given to supports having a specific surface area in the range from 50 to 500 m²/g, a pore volume in the range from 0.5 to 3.5 ml/g and a mean particle size in the range from 5 to 350 µm. Particular preference is given to supports having a specific surface area in the range from 200 to 400 m²/g, a pore volume in the range from 0.8 to 3.0 ml/g and a mean particle size of from 10 to 300 µm.

The inorganic support can be subjected to a thermal treatment, e.g. to remove adsorbed water. Such a drying treatment is generally carried out at from 80 to 300°C, preferably from 100 to 200°C, with drying at from 100 to 200°C preferably being carried out under reduced pressure and/or a blanket of inert gas (e.g. nitrogen), or the inorganic support can be calcined at from 200 to 1 000°C to produce the desired structure of the solid and/or set the desired OH concentration on the surface. The support can also be treated chemically using customary desiccants such as metal alkyls, preferably aluminum alkyls, chlorosilanes or SiCl₄, or else methylaluminoxane.

Appropriate treatment methods are described, for example, in WO 00/31090.

The inorganic support material can also be chemically modified. For example, treatment of silica gel with (NH₄)₂SiF₆ leads to fluorination of the silica gel surface, or treatment of silica gels with silanes containing nitrogen-, fluorine- or sulfur-containing groups leads to correspondingly modified silica gel surfaces.

Organic support materials such as finely divided polyolefin powders (e.g. polyethylene, polypropylene or polystyrene) can also be used and are preferably likewise freed of adhering moisture, solvent residues or other impurities by means of appropriate purification and drying operations before use. It is also possible to use functionalized polymer supports, e.g. supports based on polystyrene, via whose functional groups, for example carboxylic or hydroxy groups, at least one of the catalyst components can be immobilized. The solid compound obtained by supporting the catalyst system object of the present invention on a carrier in combination with the further addition of the alkylaluminium compound either as such or prereacted with water if necessary.

For the purpose of the present invention the term solution polymerization means that the polymer is fully soluble in the polymerization medium at the polymerization temperature used, and in a concentration range of 5 to 50 % by weight.

In order to have the polymer completely soluble in the polymerization medium, a mixtures of monomers in the presence of an inert solvent can be used. This solvent can be an aliphatic or cycloaliphatic hydrocarbon such as hexane, heptane, isooctane, isododecane, cyclohexane and methylcyclohexane. It is also possible to use mineral spirit or a hydrogenated diesel oil fraction. Also aromatic hydrocarbons can be used such as toluene. Preferred solvents to be used are cyclohexane and methylcyclohexane. The propylene content in the mixture can be varied according to the final comonomer content wished in the copolymer and the relative reactivity ratio of the comonomers. The propylene content in the liquid phase of the polymerization medium preferably ranges from 5% to 60% by weight; more preferably from 20% to 50% by weight.

The temperature range useful for the polymerization process of the present invention is comprised between 60°C and 200°C, preferably from 80°C to 150°C, more preferably from 89°C to 120°C.

Hydrogen can be efficiently used to regulate the molecular weight of the obtained polymers. Preferably the concentration of hydrogen ranges from 1 ppm to 1000 ppm, preferably from 2 ppm to 300 ppm.

The ratio of the comonomers varies accordingly, depending on the wished final copolymer and the relative comonomers reactivity ratio of the catalyst system.

The skilled man is able to select the ratio of propylene and comonomer in order to obtain the whished copolymer.

The copolymers obtained according to the process of the present invention, especially those having high comonomer content, are very sticky, this makes it difficult to produce in an industrial plant when the polymerization process is carried out in slurry or in gas phase because of the fouling in the reactor. On the contrary when a solution polymerization process is carried this problem is avoided.

According to the process of the present invention propylene is contacted with at least ethylene or an alpha olefin of formula CH₂=CHT wherein T is a C₂-C₂₀ alkyl radical. Examples of alpha olefin of formula CH₂=CHT are 1-butene, 1-pentene, 4-methyl-1-pentene, 1-hexene, 1-octene, 4,6-dimethyl-1-heptene, 1-decene, 1-dodecene, 1-tetradecene, 1-hexadecene, 1-octadecene and 1-eicosene. Preferred comonomer to be used are ethylene, 1-butene and 1-hexene.

The content of propylene derived units in the copolymers obtained according to the present invention contains up to 95 % by mol of propylene derived units. Preferably the content of propylene derived units ranges from 30% by mol to 91 % by mol. More preferably the content of propylene derived units ranges from 70% by mol to 91 % by mol.

The molecular weight distribution can be varied by using mixtures of different metallocene compounds or by carrying out the polymerization in several stages which differ as to the polymerization temperature and/or the concentrations of the molecular weight regulators and/or the monomers concentration. Moreover by carrying out the polymerization process by using a combination of two different metallocene compounds a polymer endowed with a broad melting is produced.

The polymer obtained according to the process of the present invention can further contain up to 20% by mol of a non conjugated diene. Non conjugated dienes can be a straight chain, branched chain or cyclic hydrocarbon diene having from 6 to 20 carbon atoms. Examples of suitable non-conjugated dienes are:
- straight chain acyclic dienes, such as 1,4-hexadiene and 1,6-octadiene;
- branched chain acyclic dienes, such as 5-methyl-1,4-hexadiene, 3,7-dimethyl-1,6-octadiene, 3,7-dimethyl-1,7-octadiene and mixed isomers of dihydro myricene and dihydroocinene;
- single ring alicyclic dienes, such as 1,3-cyclopentadiene, 1,4-cyclohexadiene, 1,5-cyclooctadiene and 1,5-cyclododecadiene;
- multi-ring alicyclic fused and bridged ring dienes, such as tetrahydroindene, methyl tetrahydroindene, dicyclopentadiene, bicyclo-(2,2,1)-hepta-2,5-diene; and
- alkenyl, alkylidene, cycloalkenyl and cycloalkylidene norbornenes, such as 5-methylene-2-norbornene (MNB), 5-propenyl-2-norbornene, 5-isopropylidene-2-norbornene,5-(4-cyclopentenyl)-2-norbornene, 5-cyclohexylidene-2-norbornene, 5-vinyl-2-norbornene and norbornadiene.

Preferred dienes are 1,4-hexadiene (HD), 5-ethylidene-2-norbornene (ENB), 5-vinylidene-2-norbornene (VNB), 5-methylene-2-norbornene (MNB) and dicyclopentadiene (DCPD). Particularly preferred dienes are 5-ethylidene-2-norbornene (ENB) and 1,4-hexadiene (HD). When present the non-conjugated dienes are preferably incorporated into the polymer in an amount from 0.1% to 20% by mol, preferably from 0.5% to 15% by mol, and more preferably from 0.5% to 7% by mol; more preferably from 0.5% to 3% by weight. If desired, more than one diene may be incorporated simultaneously, for example HD and ENB, with total diene incorporation within the limits specified above.

Therefore a further object of the present invention is a solution polymerization process comprising contacting under polymerization conditions propylene , at least ethylene or an alpha olefin of formula CH₂=CHT wherein T is a C₂-C₂₀ alkyl radical and a non conjugated diene, in the presence of a catalyst system obtainable by contacting:
b) at least a metallocene compound of formula (I) 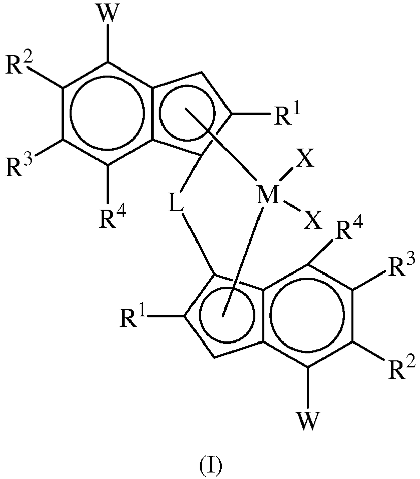
b) alumoxane or a compound capable of forming an alkyl metallocene cation; and optionally
c) an organo aluminum compound.

The following examples are given to illustrate and not to limit the invention.

### Examples

All chemicals must be handled using standard Schlenk techniques.

Methylalumoxane (MAO) was received from Albemarle as a 30% wt/wt. toluene solution and used as such.

Pure triisobutylaluminum (TIBA) was used as such.

Isododecane was purified over alumina to reach a water content below 10 ppm.

A 110 g/L TIBA/isododecane solution was obtained by mixing the above components.

### Polymer analysis

**I.V.** Intrinsic viscosities were measured in tetrahydronaphtalene THN at 135°C.

**DSC.** The melting points of the polymers (*T*ₘ) were measured by Differential Scanning Calorimetry (DSC) on a Perkin Elmer DSC-7 calorimeter equipped with Pyris 1 software, in the Solid State Properties (FE-PPC) laboratory, previously calibrated at indium and zinc melting points with particular attention in determining the baseline with required accuracy. The preparation of the samples, for calorimetric investigations, has been performed by cutting them into small pieces by using a cutter. The weight of the samples in every DSC crucible was kept at 6.0 ± 0.5 mg.

The weighted sample was sealed into aluminum pans and heated to 180°C at 10°C/minute the temperature peak was token as Tm(I). The sample was kept at 180°C for 5 minutes to allow a complete melting of all the crystallites, then cooled to 20°C at 10°C/minute. After standing 2 minutes at 20°C, the sample was heated for the second time to 180°C at 10°C/min. In this second heating run, the peak temperature was taken as the melting temperature (Tm(II)) and the area of the peak as its melting enthalpy (ΔH_{f}).

### ¹³C-NMR measurement

The chemical composition and comonomer distribution of the copolymers were investigated by ¹³C-NMR analysis with a Bruker DPX400 spectrometer operating at 100.61 MHz. The samples were measured as 8%(w/v) solutions of 1,12,2-tetrachloroethane, the ¹³C-NMR spectra were recorded at 120 °C with a 90 degree pulse, 12s of delay between pulses and CPD to remove ¹H-¹³C coupling. 1K of transients were stored in 32K data points using a spectral window of 6000Hz. The S_{δδ} peak at 29.9 ppm (nomenclature according to reference 1) was used as internal reference. The product of reactivity ratios r₁×r₂ was calculated from the triads according to reference 1. The copolymer compositions and triad distributions were determined according to reference 2. reference 1: Carman, C. J.; Harrington, R. A.; Wilkes, C. E. Macromolecules 1977, 10, 563 reference 2: Kakugo, M.; Naito, Y,; Mizunuma, K. Macromolecules 1982, 15, 1150. racemic-dimethylsilylbis(2-methyl-4-(4-*tert*-butylphenyl)-1,5,6,7-tetrahydro-*s*-indacen-1-yl)dichlorozirconium (IV) (A-1) 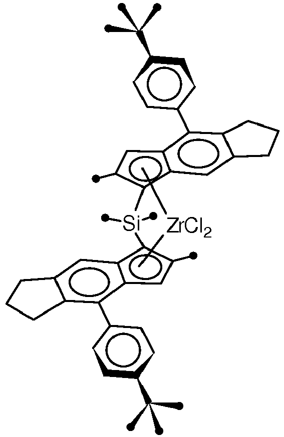 was prepared according to EP05102189.

*rac*-dimethylsilylbis(2-methyl-4-phenyl)-indenyl)dichlorozirconium (rac-µ-{bis-[η⁵-2-methyl-4-phenyl-inden-1-yl]dimethylsilanediyl}dichlorozirconium (IV)) (C-1) was prepared according to USP 5,786,432

*rac*-dimethylsilylbis(2-methyl-4-(*para*-tert-butylphenyl)-indenyl)dichlorozirconium (rac-Me₂Si(2-Me-4(4*t*BuPh)Ind)₂ZrCl₂) (C-2) (comparative) was prepared according to WO 98/40331 (example 65).

### Preparation of the catalyst system

### Catalyst system A-0C

3.6 g of silica (Sylopol 948™) is loaded in a process filter whose filter plate points upward, and suspended in 20 mL of toluene. While stirring 8.8 mL of a 30% MAO (methylalumoxane) strength solution are metered in at such a rate that the internal temperature does not exceed 35°C. After stirring for another 1 hour at a low stirrer speed, the process filter is turned that its filtration plate points downwards, the suspension is filtered, firstly under atmospheric pressure and then using 3 bar of nitrogen pressure. In parallel to the treatment of the support material, 118 mg of A-1 in 1.1 mL of 30% strength MAO are placed in a reaction vessel, the solution is stirred for 1 hour and allowed to settle for a further 30 minutes. The solution is subsequently added to the pretreated support material suspended in 20 ml of toluene. After addition is complete, the suspension is stirred for 15 minutes. A nitrogen pressure of 3 bar is applied in order to drain the solution. At the end the solid is dried under vacuum.

### Catalyst system A-1C

### A-1/MAO:TIBA 2:1 (Al/Zr = 400)

14.6 mL of TIBA/isododecane solution (110 g/L) were mixed with 3.4 mL of MAO/toluene solution (Albemarle 30%wt/wt) to obtain a MAO/TIBA molar ratio of 2:1. The solution was stirred for 30 minutes at room temperature. Then, 50 mg of A-1 were dissolved in the solution. The orange solution did not show any trace of residual solid.

The final solution was diluted with 8 mL of toluene to reach a concentration of 100g/L (1.92g A-1/L).

### Catalyst system C-1C

### C-1/MAO:TIBA 2:1 (Al/Zr = 400):

9.5 mL of TIBA/isododecane solution (110 g/L) were mixed with 2.7 mL of MAO/toluene solution (Albemarle 30%wt/wt, 12.8 mmol MAO) to obtain a MAO/TIBA molar ratio of 2.4:1. The solution was stirred for 30 minutes at room temperature. Then, 25 mg of C-1 were dissolved in the solution. The solution did not show any trace of residual solid. The final solution was diluted with 5.1 mL of toluene to reach a concentration of 105 g/L (1.45 g_{metallocene}/L).

### Catalyst system C-2C

### C2 /MAO:TIBA 2:1 (Al/Zr = 400)

8.1 mL of TIBA/isododecane solution (110 g/L) were mixed with 1.9 mL of MAO/toluene solution (Albemarle 30%wt/wt, 9 mmol MAO) to obtain a MAO/TIBA molar ratio of 2:1. The solution was stirred for 30 minutes at room temperature. Then, 25 mg of C-2 were dissolved in the solution. The solution did not show any trace of residual solid. The final solution was diluted with 4.4 mL of toluene to reach a concentration of 100 g/L (1.74 g_{metallocene}/L).

### Polymerization tests.

### Example 1

A 4.4L jacketed stainless-steel autoclave, equipped with a magnetically driven stirrer and a 35-mL stainless-steel vial and connected to a thermostat for temperature control, was previously purified by washing with an Al(*i*-Bu)₃ solution in hexane and dried at 50°C in a stream of nitrogen.

6 mmol of Al(*i*-Bu)₃ (as a 100g/L solution in hexane), 958g of cyclo-hexane, 45 g of ethylene and 489 g of propylene were fed into the reactor in order to obtain a liquid composition at 90°C, 22 bar-g , corresponding to a liquid composition of **7/93** % wt ethylene/propylene.

1 mL of the catalyst system A-1C containing the catalyst/cocatalyst mixture (1.92 mg metallocene/mL solution) was injected in the autoclave by means of 4 mL of cyclohexane through the stainless-steel vial.

A mixture of ethylene propylene **18/82** % wt was continuously fed for 1 hour to maintain the pressure of 22 bar-g: 79.6 g of propylene and 18.9 g of ethylene were consumed.

The pressure into the autoclave was decreased until 20 bar, the bottom discharge valve was opened and the copolymer was discharged into a heated steel tank containing water at 70°C. The tank heating was switched off and a flow of nitrogen at 0.5 bar-g was fed. After cooling at room temperature, the steel tank was opened and the wet polymer collected. The wet polymer was dried in an oven under reduced pressure at 70°C. Polymerization data are reported in table 1

### Example 2

The procedure of example 1 was repeated feeding 958g of c-hexane, 41 g of Ethylene and 651 g of propylene in order to obtain a liquid composition at 90°C, 29 bar-g , corresponding to a liquid composition of 5/**95** %wt ethylene/propylene.

1 mL of the the catalyst system A-1C containing the catalyst/cocatalyst mixture (1.92 mg metallocene/mL solution) was injected in the autoclave by means of 4 mL of cyclohexane through the stainless-steel vial.

A mixture of ethylene/propylene **14/86** %wt was continuously fed for 30 minutes to maintain the pressure of 29 bar-g: 98.6 g of propylene and 16.3 g of ethylene were consumed.

The copolymer was discharged according to the procedure described in the first example. Polymerization data are reported in table 1

### Example 3

The procedure of example 1 was repeated feeding 958g of c-hexane, 64 g of Ethylene and 473 g of propylene in order to obtain a liquid composition at 90°C, 23 bar-g , corresponding to a liquid composition of 10/90%wt ethylene/propylene.

1 mL of the the catalyst system A-1C containing the catalyst/cocatalyst mixture (1.92 mg metallocene/mL solution) was injected in the autoclave by means of 4 mL of cyclohexane through the stainless-steel vial.

A mixture of ethylene/propylene **20/80** % wt was continuously fed for 30 minutes to maintain the pressure of 23 bar-g: 30.9 g of propylene and 7.5 g of ethylene were consumed. The results are reported in Table 1.

The copolymer was discharged according to the procedure described in the first example.

Polymerization data are reported in table 1

### Comparative example 4

The procedure of example 1 was repeated feeding 958g of c-hexane, 31 g of Ethylene and 500 g of propylene in order to obtain a liquid composition at 90°C, 22 bar-g , corresponding to a liquid composition of 5/95%wt ethylene/propylene.

2 mL of the the catalyst system C-1C containing the catalyst/cocatalyst mixture (1.48 mg metallocene/mL solution) was injected in the autoclave by means of 4 mL of cyclohexane through the stainless-steel vial.

A mixture of ethylene/propylene **19/81** % wt was continuously fed for 30 minutes to maintain the pressure of 22 bar-g: 22.6 g of propylene and 5.3 g of ethylene were consumed.

The copolymer was discharged according to the procedure described in the first example.

Polymerization data are reported in table 1

### Comparative example 5

The procedure of example 1 was repeated feeding 958g of c-hexane, 50 g of Ethylene and 484 g of propylene in order to obtain a liquid composition at 90°C, 23 bar-g , corresponding to a liquid composition of 8/92%wt ethylene/propylene.

3 mL of the solution the catalyst system C-1C containing the catalyst/cocatalyst mixture (1.48 mg metallocene/mL solution) was injected in the autoclave by means of 4 mL of cyclohexane through the stainless-steel vial.

A mixture of ethylene/propylene **18/82** % wt was continuously fed for 30 minutes to maintain the pressure of 23 bar-g: 72.6 g of propylene and 14.9g of ethylene were consumed.

The copolymer was discharged according to the procedure described in the first example.

Polymerization data are reported in table 1

### Comparative example 6

The procedure of example 1 was repeated feeding 958 g of cyclohexane, 64 g of ethylene and 473 g of propylene in order to obtain a liquid composition at 90°C, 26 bar-g , corresponding to a liquid composition of 10/90%wt ethylene/propylene.

4 mL of the catalyst system C-1C containing the catalyst/cocatalyst mixture (1.48 mg metallocene/mL solution) was injected in the autoclave by means of 4 mL of cyclohexane through the stainless-steel vial.

A mixture of ethylene/propylene **20/80** % wt was continuously fed for 30 minutes to maintain the pressure of 26 bar-g: 186.5 g of propylene and 45.9 g of ethylene were consumed.

The copolymer was discharged according to the procedure described in the first example.

Polymerization data are reported in table 1

### Comparative example 7

The procedure of example 1 was repeated feeding 958g of cyclohexane, 31 g of ethylene and 500 g of propylene in order to obtain a liquid composition at 90°C, 21 bar-g , corresponding to a liquid composition of 5/95%wt ethylene/propylene.

4 mL of the catalyst system C-2C containing the catalyst/cocatalyst mixture (1.74 mg metallocene/mL solution) was injected in the autoclave by means of 4 mL of cyclohexane through the stainless-steel vial.

A mixture of ethylene/propylene **11/89** % wt was continuously fed for 30 minutes to maintain the pressure of 21 bar-g: 33.7 g of propylene and 4.1 g of ethylene were consumed.

The copolymer was discharged according to the procedure described in the first example.

Polymerization data are reported in table 1

### Comparative example 8

The procedure of example 1 was repeated feeding 958g of cyclo-hexane, 50 g of ethylene and 484 g of propylene in order to obtain a liquid composition at 90°C, 24 bar-g , corresponding to a liquid composition of 8/92%wt ethylene/propylene.

4 mL of the catalyst system C-1C containing the catalyst/cocatalyst mixture (1.74 mg metallocene/mL solution) was injected in the autoclave by means of 4 mL of cyclohexane through the stainless-steel vial.

A mixture of ethylene/propylene **16/84** % wt was continuously fed for 30 minutes to maintain the pressure of 24 bar-g: 31.2 g of propylene and 5.9 g of ethylene were consumed.

The copolymer was discharged according to the procedure described in the first example.

Polymerization data are reported in table 1

### Comparative example 9

The procedure of example 1 was repeated feeding 958g of cyclo-hexane, 64 g of ethylene and 473 g of propylene in order to obtain a liquid composition at 90°C, 26 bar-g , corresponding to a liquid composition of 10/90%wt ethylene/propylene.

4 mL of the catalyst system C-2C containing the catalyst/cocatalyst mixture (1.74 mg metallocene/mL solution) was injected in the autoclave by means of 4 mL of c-hexane through the stainless-steel vial.

A mixture of ethylene/propylene **20/80** % wt was continuously fed for 30 minutes to maintain the pressure of 26 bar-g: 86.5 g of propylene and 21.6 g of ethylene were consumed.

The copolymer was discharged according to the procedure described in the first example.

Polymerization data are reported in table 1

### Example 10

A 4.4L jacketed stainless-steel autoclave, equipped with a magnetically driven stirrer and a 35-mL stainless-steel vial and connected to a thermostat for temperature control, was previously purified by washing with an Al(*i*-Bu)₃ solution in hexane and dried at 50°C in a stream of nitrogen.

6 mmol of Al(*i*-Bu)₃ (as a 100g/L solution in hexane), 950 g of cyclo-hexane, 70.5 g of ethylene and 469 g of propylene were fed into the reactor in order to obtain a liquid composition at 90°C, 26.85 bar-g, corresponding to a liquid composition of 13/87 % wt ethylene/propylene.

115 mg of the catalyst A-0C was injected in the autoclave by means of 5 mL of isododecane through the stainless-steel vial.

A mixture of ethylene propylene **20/80** % wt was continuously fed for 30 minutes to maintain the pressure of 26.85 bar-g: 118.5 g of propylene and 30.6 g of ethylene were consumed.

The copolymer was discharged according to the procedure described in the first example. Polymerization data are reported in table 1

**Table 1**

| Ex. | Catalyst system | Tₚₒₗ °C | Activity kg/(gmet *h)§ | I.V. dl/g | C2_{cont} mol% | rlr2 |
|---|---|---|---|---|---|---|
| 1 | A-1C | 95 | **272** | 1,61 | 19.9 | **1.37** |
| 2 | A-1C | 95 | **347** | 1,44 | 14.6 | **1.67** |
| 3 | A-1C | 90 | **200** | 2,08 | 30.2 | **1.60** |
| 4* | C-1C | 92 | **16** | 1,25 | 10.7 | **2.78** |
| 5* | C-1C | 90 | **38** | 1,23 | 17.2 | **2.18** |
| 6* | C-1C | 95 | **85** | 1,05 | 24.6 | **2.01** |
| 7* | C-2C | 90 | **26** | 1,29 | 11.6 | **2.52** |
| 8* | C-2C | 90 | **36** | 1,16 | 17.9 | **2.34** |
| 9* | C-2C | 92 | **74** | 1,26 | 23.8 | **2.01** |
| 10 | A-0C | 95 | **214** | 1.20 | 33.9 | **1.52** |

| | | | | | | |
|---|---|---|---|---|---|---|
| * comparative n.a. not available § activity is given in kg of copolymers per gram of metallocene per hour | | | | | | |

From table 1 it clearly results that the polymerization activity of the metallocene compounds of formula (I) used in the process of the present invention is considerably higher than that of the metallocene compounds used in the comparative examples at the same polymerization conditions. Also the molecular weight of the polymer obtained with the process of the present invention is higher than those of the comparative example. This higher activity is maintained also when the metallocene compounds of formula (I) are supported.

### Catalyst system A-1C1

### A-1/MAO:TIBA 2/:1 (AITOT/Zr = 600)

21.8 mL of TIBA/isododecane solution (110 g/L) were mixed with 5 mL of MAO/toluene solution (Albemarle 30%wt/wt, 24 mmol MAO) to obtain a MAO/TIBA molar ratio of 2:1. The solution was stirred for 30 min at room temperature. Then, 49.6 mg of A-1 were dissolved in the solution and the resulting green/brown suspension was diluted with 11.7 mL of isododecane to reach a concentration of 100 gTOT/L and 1.29 gmetallocene/L. The mixture turned to a dark orange solution after overnight stirring at room temperature.

### Polymerization tests

### Example 11

A 4.4L jacketed stainless-steel autoclave, equipped with a magnetically driven stirrer and a 35-mL stainless-steel vial and connected to a thermostat for temperature control, was previously purified by washing with an Al(*i*-Bu)₃ solution in hexane and dried at 50°C in a stream of nitrogen.

6 mmol of Al(*i*-Bu)₃ (as a 100g/L solution in hexane), 720 g of cyclo-hexane, 35 g of ethylene and 654 g of propylene were fed into the reactor in order to obtain a liquid composition at 100°C, 33 bar-g, corresponding to a liquid composition of 0.04 (wt/wt) ethylene/propylene.

**1 ml** of the catalyst A-1C1 was injected in the autoclave by means of 5 mL of isododecane through the stainless-steel vial.
ethylene propylene **10/90** % wt was continuously fed for 30 minutes to maintain the pressure of 33 bar-g: 171.3 g of propylene and 19.7 g of ethylene were consumed.

The copolymer was discharged according to the procedure described in the first example. Polymerization data are reported in table 2

### Example 12

A 4.4L jacketed stainless-steel autoclave, equipped with a magnetically driven stirrer and a 35-mL stainless-steel vial and connected to a thermostat for temperature control, was previously purified by washing with an Al(*i*-Bu)₃ solution in hexane and dried at 50°C in a stream of nitrogen.

6 mmol of Al(*i*-Bu)₃ (as a 100g/L solution in hexane), 715 g of cyclo-hexane, 61 g of ethylene and 631 g of propylene and 50 ml of hydrogen were fed into the reactor in order to obtain a liquid composition at 100°C, 35 bar-g, corresponding to a liquid composition of 0.08 (wt/wt) ethylene/propylene.

**1 ml** of the catalyst A-1C1 was injected in the autoclave by means of 5 mL of isododecane through the stainless-steel vial.
ethylene propylene **17/83**% wt was continuously fed for 30 minutes to maintain the pressure of 35 bar-g: 109.3 g of propylene and 22.8 g of ethylene were consumed.

The copolymer was discharged according to the procedure described in the first example. Polymerization data are reported in table 2

### Example 13

A 4.4L jacketed stainless-steel autoclave, equipped with a magnetically driven stirrer and a 35-mL stainless-steel vial and connected to a thermostat for temperature control, was previously purified by washing with an Al(*i*-Bu)₃ solution in hexane and dried at 50°C in a stream of nitrogen.

6 mmol of Al(*i*-Bu)₃ (as a 100g/L solution in hexane), 715 g of cyclo-hexane, 61 g of ethylene and 631 g of propylene and 500 ml of hydrogen were fed into the reactor in order to obtain a liquid composition at 100°C, 35 bar-g, corresponding to a liquid composition of 0.08 (wt/wt) ethylene/propylene.

**1 ml** of the catalyst A-1C1 was injected in the autoclave by means of 5 mL of isododecane through the stainless-steel vial.
ethylene propylene **17/83**% wt was continuously fed for 30 minutes to maintain the pressure of 35 bar-g: 238 g of propylene and 48.6 g of ethylene were consumed.

The copolymer was discharged according to the procedure described in the first example.

Polymerization data are reported in table 2

### Example 14

A 4.4L jacketed stainless-steel autoclave, equipped with a magnetically driven stirrer and a 35-mL stainless-steel vial and connected to a thermostat for temperature control, was previously purified by washing with an Al(*i*-Bu)₃ solution in hexane and dried at 50°C in a stream of nitrogen.

6 mmol of Al(*i*-Bu)₃ (as a 100g/L solution in hexane), 676 g of cyclo-hexane, 72 g of ethylene and 647 g of propylene were fed into the reactor in order to obtain a liquid composition at 100°C, 38 bar-g, corresponding to a liquid composition of 0.09 (wt/wt) ethylene/propylene.

**1.5 ml** of the catalyst A-1C1 was injected in the autoclave by means of 5 mL of isododecane through the stainless-steel vial.
ethylene propylene **21/79**% wt was continuously fed for 30 minutes to maintain the pressure of 38 bar-g: 96.1 g of propylene and 25.7 g of ethylene were consumed.

The copolymer was discharged according to the procedure described in the first example. Polymerization data are reported in table 2

### Example 15

A 4.4L jacketed stainless-steel autoclave, equipped with a magnetically driven stirrer and a 35-mL stainless-steel vial and connected to a thermostat for temperature control, was previously purified by washing with an Al(*i*-Bu)₃ solution in hexane and dried at 50°C in a stream of nitrogen.

6 mmol of Al(*i*-Bu)₃ (as a 100g/L solution in hexane), 859 g of cyclo-hexane, 53 g of ethylene and 508 g of propylene were fed into the reactor in order to obtain a liquid composition at 120°C, 37 bar-g, corresponding to a liquid composition of 0.09 (wt/wt) ethylene/propylene.

**1.5 ml** of the catalyst A-1C1 was injected in the autoclave by means of 5 mL of isododecane through the stainless-steel vial.
ethylene propylene **17/83**% wt was continuously fed for 30 minutes to maintain the pressure of 37 bar-g: 144.6 g of propylene and 29.7 g of ethylene were consumed.

The copolymer was discharged according to the procedure described in the first example. Polymerization data are reported in table 2

**Table 2**

| Ex. | Tₚₒₗ °C | Activity kg/(gmet *30 min)§ | I.V. dl(g) | C2_{cont} mol% | rlr2 |
|---|---|---|---|---|---|
| 11 | 100 | **247** | 1.43 | 13.0 | **1.4** |
| 12 | 100 | **147** | 1.95 | 24.7 | **1.4** |
| 13 | 100 | **258** | 1.22 | 22.6 | **1.5** |
| 14 | 100 | **265** | 1,91 | 29.2 | **1.4** |
| 15 | 120 | **195** | 1,15 | 31.7 | **1.2** |

| | | | | | |
|---|---|---|---|---|---|
| § activity is given in kg of copolymers per gram of metallocene per 30 minutes | | | | | |

## Claims

1. A solution polymerization process for the obtainment of a copolymer containing from 30 up to 91 % by mol of propylene units and being fully soluble in a polymerization medium, said polymerization medium being a mixture of monomers in the presence of an inert carbon solvent, and in a concentration range of 5 to 50% by weight, comprising contacting under polymerization conditions at a polymerization temperature comprised between 89 and 120 °C, propylene and at least ethylene or an alpha olefin of formula CH₂=CHT wherein T is a C₂-C₂₀ alkyl radical, in the presence of a catalyst system obtainable by contacting:
a) at least a metallocene compound of formula (I) 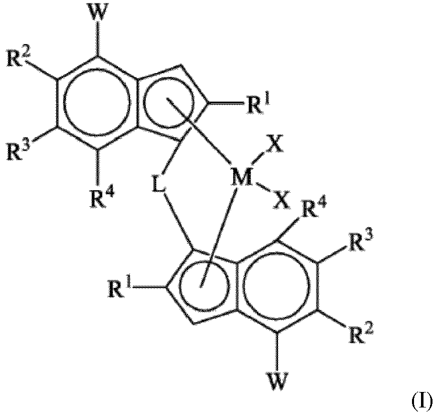 and
b) alumoxane or a compound capable of forming an alkyl metallocene cation;
wherein in the metallocene compound of formula (I):
M is an atom of a transition metal selected from those belonging to group 3, 4, or to the lanthanide or actinide groups in the Periodic Table of the Elements;
X, equal to or different from each other, is a hydrogen atom, a halogen atom, a R, OR, OR'O, OSO₂CF₃, OCOR, SR, NR₂ or PR₂ group wherein R is a linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radical; optionally containing heteroatoms belonging to groups 13-17 of the Periodic Table of the Elements; and R' is a C₁-C₂₀-alkylidene, C₆-C₂₀-arylidene, C₇-C₂₀-alkylarylidene, or C₇-C₂₀-arylalkylidene radical;
L is a divalent bridging group selected from C₁-C₂₀ alkylidene, C₃-C₂₀ cycloalkylidene, C₆-C₂₀ arylidene, C₇-C₂₀ alkylarylidene, or a C₇-C₂₀ arylalkylidene radicals, optionally containing heteroatoms belonging to groups 13-17 of the Periodic Table of the Elements, or it is a silylidene radical containing up to 5 silicon atoms;
R¹ is a linear C₁-C₄₀ hydrocarbon radical optionally containing heteroatoms belonging to groups 13-17 of the Periodic Table of the Elements;
R₂ and R₃, equal to or different from each other, are C₁-C₄₀ hydrocarbon radicals optionally containing heteroatoms belonging to groups 13-17 of the Periodic Table of the Elements or R₂ and R₃, are part of 4-7 membered ring condensed to the benzene ring of the indenyl moiety; said ring optionally containing heteroatoms belonging to groups 13-16 of the Periodic Table of the Elements; the valence of each atom forming said ring being filled with R¹⁸ radicals, wherein R¹⁸, equal to or different from each other, are hydrogen atoms or C₁-C₄₀ hydrocarbon radicals;
R⁴ is a hydrogen atom or a C¹-C⁴⁰ hydrocarbon radical optionally containing heteroatoms belonging to groups 13-17 of the Periodic Table of the Elements;
W is an aromatic 5 or 6 membered ring that can contain heteroatoms belonging to groups 13-16 of the Periodic Table of the Elements; the valence of each atom of said ring is substituted with hydrogen atom or it can optionally be substituted with R⁵ groups wherein R⁵, equal to or different from each other, are C₁-C₄₀ hydrocarbon radicals optionally containing heteroatoms belonging to groups 13-17 of the Periodic Table of the Elements.

2. The process according to claim 1 wherein the catalyst system further comprises c) an organo aluminum compound.

3. The process according to claims 1 or 2 wherein in the compound of formula (I) M is zirconium, titanium or hafnium; X is a hydrogen atom, a halogen atom, a OR'O or R group; L is Si(R¹¹)₂ wherein R¹¹ is a linear or branched, cyclic or acyclic, C₁C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radical; R¹ is a C₁-C₁₀-alkyl radical.

4. The process according to anyone of claims 1 to 3 wherein in the compound of formula (I) R² and R₃, are part of 5-6 membered ring condensed to the benzene ring of the indenyl moiety; said ring being substituted with R¹⁸ radicals wherein R¹⁸ is a hydrogen atom or a linear or branched, C₁-C₂₀-alkyl radical, R⁴ is a hydrogen atom, a C₁-C₁₀-alkyl or a C₆-C₄₀-aryl radical.

5. The process according to anyone of claims 1-4 wherein in the compound of formula (I) W is selected from the group comprising the following moieties of formula (Wa), (Wb) and (Wc): 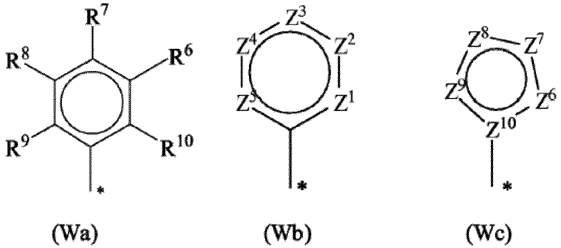 wherein the * represents the point in which the moiety bound the indenyl moiety of the compound of formula (I);
R⁶, R⁷, R⁸, R⁹ and R¹⁰, equal to or different from each other, are hydrogen atoms or C₁-C₄₀ hydrocarbon radicals optionally containing heteroatoms belonging to groups 13-17 of the Periodic Table of the Elements;
Z¹ is a nitrogen atom or a CR¹⁰ group; Z² is a nitrogen atom or a CR⁶ group; Z³ is a nitrogen atom or a CR⁷ group; Z⁴ is a nitrogen atom or a CR⁸ group; Z⁵ is a nitrogen atom or a CR⁹ group; provided that not more that 2 groups among Z¹, Z², Z³, Z⁴ and Z⁵ are nitrogen atoms; Z⁶ is an oxygen atom, a sulfur atom, a NR¹³ group or a CR¹³ group; Z⁷ is an oxygen atom, a sulfur atom, a NR¹⁴ group or a CR¹⁴ group; Z⁸ is an oxygen atom, a sulfur atom, a NR¹⁵ group or a CR¹⁵ group; Z⁹ is an oxygen atom, a sulfur atom, a NR¹⁶ group or a CR¹⁶ group;
Z¹⁰ is a nitrogen atom or a carbon atom that bonds the indenyl moiety of the structure of formula (I); with the proviso that not more than 1 group among Z⁶, Z⁷, Z⁸, Z⁹ or Z¹⁰ is a sulfur atom, an oxygen atom or a nitrogen-containing group atom selected from NR¹³, NR¹⁴, NR¹⁵, NR¹⁶, and a nitrogen atom;
R¹³, R¹⁴, R¹⁵ and R¹⁶, equal to or different from each other, are hydrogen atoms or C₁-C₄₀ hydrocarbon radicals optionally containing heteroatoms belonging to groups 13-17 of the Periodic Table of the Elements;

6. The process according to anyone of claims 1-5 wherein the compound of formula (I) has formula (IIa), (IIb) or (IIc): 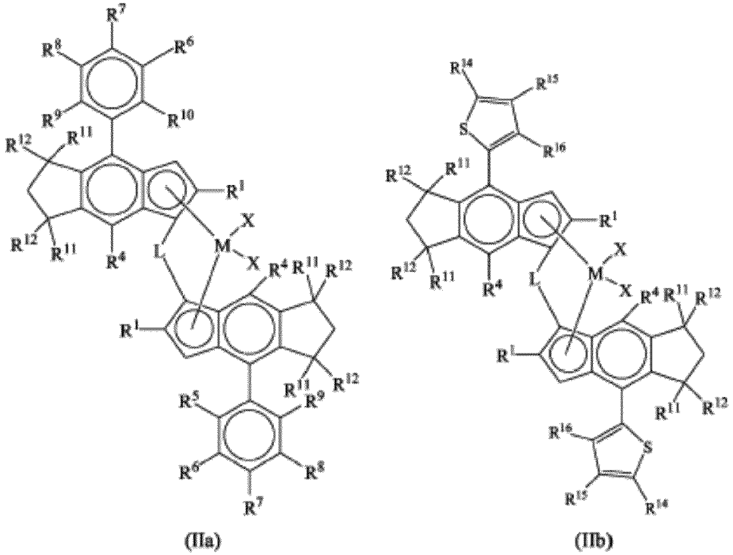 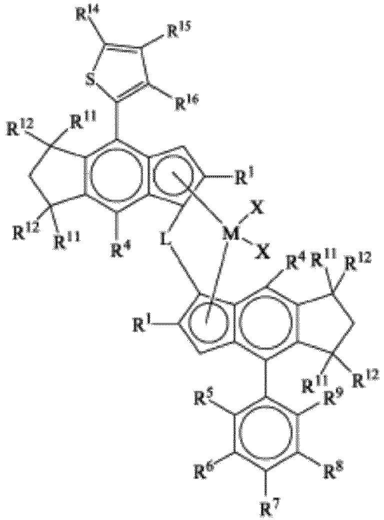 wherein M, L, X, R¹, R⁴, R¹⁰, R⁶, R⁷, R⁸, R¹⁴, R¹⁵ and R¹⁶ and R⁹ have the meaning reported in claims 1-7 and R¹¹ and R¹², equal to or different from each other, are hydrogen atoms or C₁-C₄₀ hydrocarbon radicals optionally containing heteroatoms belonging to groups 13-17 of the Periodic Table of the Elements.

7. The process according to anyone of claims 1-6 carried out at a temperature ranging from 60°C to 200°C.

8. The process according to anyone of claims 1-7 wherein the polymerization medium is a mixture of liquid monomers in the presence of an aliphatic or cycloaliphatic hydrocarbon solvent.

9. The process according to anyone of claims 1-8 wherein propylene is copolymerized with ethylene, 1-butene or 1-hexene.

10. The process according to anyone of claims 1-9 wherein propylene, at least ethylene or an alpha olefin of formula CH₂=CHT wherein T is a C₂-C₂₀ alkyl radical and a non conjugated diene, are contacted under polymerization conditions in the presence of a catalyst system described in claim 1.

11. The process according to anyone of claims 1-10 wherein said process is carried out in the presence of hydrogen.

## Patentansprüche

1. Lösungspolymerisationsverfahren, um ein Copolymer zu erhalten, das 30 bis zu 91 Mol.% Propyleneinheiten enthält und in einem Polymerisationsmedium, wobei das Polymerisationsmedium eine Mischung von Monomeren in Gegenwart eines inerten Kohlenstofflösungsmittels ist, und in einem Konzentrationsbereich von 5 bis 50 Gew.% vollständig löslich ist, umfassend Kontaktieren von Propylen und mindestens Ethylen oder einem alpha-Olefin mit der Formel CH₂=CHT, wobei T ein C₂-C₂₀-Alkylrest ist, unter Polymerisationsbedingungen bei einer Polymerisationstemperatur, die zwischen 89 und 120 °C liegt, in Gegenwart eines Katalysatorsystems, das erhalten wird durch Kontaktieren von:
a) mindestens einer Metallocenverbindung mit der Formel (I) 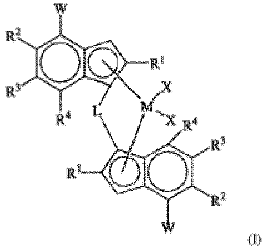 und
b) Alumoxan oder einer Verbindung, die ein Alkylmetallocenkation bilden kann;
wobei in der Metallocenverbindung mit der Formel (I)
M ein Atom eines Übergangsmetalls ausgewählt aus denjenigen der Gruppe 3, 4 oder den Lanthanid- oder Actinidgruppen im Periodensystem der Elemente ist;
X gleich oder voneinander verschieden und ein Wasserstoffatom, ein Halogenatom, eine Gruppe R, OR, OR'O, OSO₂CF₃, OCOR, SR, NR₂ oder PR₂ sind, wobei R ein linearer oder verzweigter, cyclischer oder acyclischer C₁-C₄₀-Alkyl-, C₂-C₄₀-Alkenyl-, C₂-C₄₀-Alkinyl-, C₆-C₄₀-Aryl-, C₇-C₄₀-Alkylaryl- oder C₇-C₄₀-Arylalkylrest ist; der gegebenenfalls Heteroatome enthält, die zu den Gruppen 13-17 des Periodensystems der Elemente gehören; und R' ein C₁-C₂₀-Alkyliden-, C₆-C₂₀-Aryliden-, C₇-C₂₀-Alkylaryliden- oder C₇-C₂₀-Arylalkylidenrest ist;
L eine zweiwertige Brückengruppe ausgewählt aus C₁-C₂₀-Alkyliden-, C₃-C₂₀-Cycloalkyliden-, C₆-C₂₀-Aryliden-, C₇-C₂₀-Alkylaryliden- oder C₇-C₂₀-Arylalkylidenresten ist, die gegebenenfalls Heteroatome enthält, die zu den Gruppen 13-17 des Periodensystems der Elemente gehören, oder ein Silylidenrest ist, der bis zu 5 Siliciumatome enthält;
R¹ ein linearer C₁-C₄₀-Kohlenwasserstoffrest ist, der gegebenenfalls Heteroatome enthält, die zu den Gruppen 13-17 des Periodensystems der Elemente gehören;
R₂ und R_{3 [MQA1]}gleich oder voneinander verschieden sind und C₁-C₄₀-Kohlenwasserstoffreste sind, die gegebenenfalls Heteroatome enthalten, die zu den Gruppen 13-17 des Periodensystems der Elemente gehören, oder R₂ und R_{3 [MQA2]} Teil eines 4-7-gliedrigen Rings sind, der an den Benzolring des Indenylanteils kondensiert ist; wobei der Ring gegebenenfalls Heteroatome enthält, die zu den Gruppen 13-16 des Periodensystems der Elemente gehören; wobei die Wertigkeiten jedes Atoms, welches den Ring bildet, mit R¹⁸-Resten abgesättigt werden, wobei R¹⁸ gleich oder voneinander verschieden sind und Wasserstoffatome oder C₁-C₄₀-Kohlenwasserstoffreste sind;
R⁴ ein Wasserstoffatom oder C¹-C⁴⁰_{[MQA3]}-Kohlenwasserstoffrest ist, der gegebenenfalls Heteroatome enthält, die zu den Gruppen 13-17 des Periodensystems der Elemente gehören;
W ein aromatischer 5- oder 6-gliedriger Ring ist, der Heteroatome enthalten kann, die zu den Gruppen 13-16 des Periodensystems der Elemente gehören; wobei die Wertigkeit jedes Atoms des Rings mit einem Wasserstoffatom substituiert ist oder es gegebenenfalls mit R⁵-Gruppen substituiert sein kann, wobei R⁵ gleich oder voneinander verschieden und C₁-C₄₀-Kohlenwassrstoffreste sind, die gegebenenfalls Heteroatome enthalten, die zu den Gruppen 13-17 des Periodensystems der Elemente gehören.

2. Verfahren nach Anspruch 1, wobei das Katalysatorsystem ferner c) eine Organoaluminiumverbindung umfasst.

3. Verfahren nach den Ansprüchen 1 oder 2, wobei in der Verbindung mit der Formel (I) M Zirconium, Titan oder Hafnium ist; X ein Wasserstoffatom, ein Halogenatom, eine Gruppe OR'O oder R ist; L Si(R¹¹)₂ ist, wobei R¹¹ ein linearer oder verzweigter, cyclischer oder acyclischer C₁-C₄₀-Alkyl-, C₂-C₄₀-Alkenyl-, C₂-C₄₀-Alkinyl-, C₆-C₄₀-Aryl-, C₇-C₄₀-Alkylaryl- oder C₇-C₄₀-Arylalkylrest ist; R¹ ein C₁-C₁₀-Alkylrest ist.

4. Verfahren nach einem der Ansprüche 1 bis 3, wobei in der Verbindung mit der Formel (I) R² und R³ Teil eines 5- bis 6-gliedrigen Rings sind, der an den Benzolring des Indenylanteils kondensiert ist; wobei der Ring mit R¹⁸-Resten substituiert ist, wobei R¹⁸ ein Wasserstoffatom oder ein linearer oder verzweigter C₁-C₂₀-Alkylrest ist, R⁴ ein Wasserstoffatom, ein C₁-C₁₀-Alkyl- oder ein C₆-C₄₀-Arylrest ist.

5. Verfahren nach einem der Ansprüche 1-4, wobei in der Verbindung mit der Formel (I) W ausgewählt sind aus der Gruppe umfassend die folgenden Anteile mit den Formeln (Wa), (Wb) und (Wc): 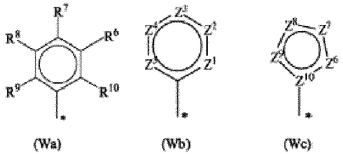 wobei das * den Punkt repräsentiert, an dem der Anteil den Indenylanteil der Verbindung mit der Formel (I) bindet;
R⁶, R⁷, R⁸, R⁹ und R¹⁰ gleich oder voneinander verschieden und Wasserstoffatome oder C₁-C₄₀-Kohlenwasserstoffreste sind, die gegebenenfalls Heteroatome enthalten, die zu den Gruppen 13-17 des Periodensystems der Elemente gehören;
Z¹ ein Stickstoffatom oder eine Gruppe CR¹⁰ ist; Z² ein Stickstoffatom oder eine Gruppe CR⁶ ist; Z³ ein Stickstoffatom oder eine Gruppe CR⁷ ist; Z⁴ ein Stickstoffatom oder eine Gruppe CR⁸ ist; Z⁵ ein Stickstoffatom oder eine Gruppe CR⁹ ist; mit der Maßgabe, dass nicht mehr als 2 Gruppen von Z¹, Z², Z³, Z⁴ und Z⁵ Stickstoffatome sind; Z⁶ ein Sauerstoffatom, ein Schwefelatom, eine Gruppe NR¹³ oder eine Gruppe CR¹³ ist; Z⁷ ein Sauerstoffatom, ein Schwefelatom, eine Gruppe NR¹⁴ oder eine Gruppe CR¹⁴ ist; Z⁸ ein Sauerstoffatom, ein Schwefelatom, eine Gruppe NR¹⁵ oder eine Gruppe CR¹⁵ ist; Z⁹ ein Sauerstoffatom, ein Schwefelatom, eine Gruppe NR¹⁶ oder eine Gruppe CR¹⁶ ist;
Z¹⁰ ein Stickstoffatom oder ein Kohlenstoffatom ist, das den Indenylanteil der Struktur mit der Formel (I) bindet; mit der Maßgabe, dass nicht mehr als 1 Gruppe von Z⁶, Z⁷, Z⁸, Z⁹ oder Z¹⁰ ein Schwefelatom, ein Sauerstoffatom oder ein Atom einer stickstoffhaltigen Gruppe ausgewählt aus NR¹³, NR¹⁴, NR¹⁵, NR¹⁶ und einem Stickstoffatom ist;
R¹³, R¹⁴, R¹⁵ und R¹⁶ gleich oder voneinander verschieden und Wasserstoffatome oder C₁-C₄₀-Kohlenwasserstoffreste sind, die gegebenenfalls Heteroatome enthalten, die zu den Gruppen 13-17 des Periodensystems der Elemente gehören.

6. Verfahren nach einem der Ansprüche 1 bis 5, wobei die Verbindung der Formel (I) die Formel (IIa), (IIb) oder (IIc) aufweist: 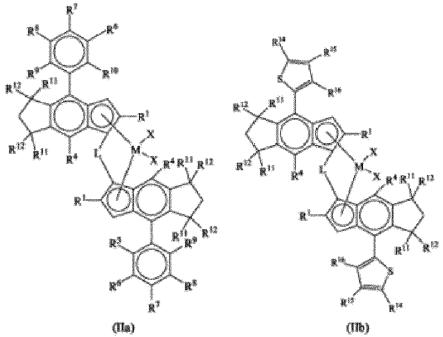 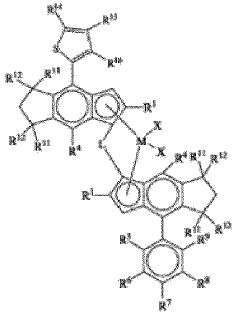 wobei M, L, X, R¹, R⁴, R¹⁰, R⁶, R⁷, R⁸, R¹⁴, R¹⁵ und R¹⁶ und R⁹ die in den Ansprüchen 1 bis 7 angegebene Bedeutung haben, und R¹¹ und R¹² gleich oder voneinander verschieden sind und Wasserstoffatome oder C₁-C₄₀-Kohlenwasserstoffreste sind, die gegebenenfalls Heteroatome enthalten, die zu den Gruppen 13-17 des Periodensystems der Elemente gehören.

7. Verfahren nach einem der Ansprüche 1 bis 6, das bei einer Temperatur im Bereich von 60 °C bis 200 °C durchgeführt wird.

8. Verfahren nach einem der Ansprüche 1 bis 7, wobei das Polymerisationsmedium eine Mischung von flüssigen Monomeren in Gegenwart eines aliphatischen oder cycloaliphatischen Kohlenwasserstofflösungsmittels ist.

9. Verfahren nach einem der Ansprüche 1 bis 8, wobei Propylen mit Ethylen, 1-Buten oder 1-Hexen copolymerisiert wird.

10. Verfahren nach einem der Ansprüche 1 bis 9, wobei Propylen, mindestens Ethylen oder ein alpha-Olefin mit der Formel CH₂=CHT, wobei T ein C₂-C₂₀-Alkylrest ist, und ein nicht-konjugiertes Dien unter Polymerisationsbedingungen in Gegenwart eines Katalysatorsystems, wie in Anspruch 1 beschrieben, kontaktiert werden.

11. Verfahren nach einem der Ansprüche 1 bis 10, wobei die Polymerisation in Gegenwart von Wasserstoff durchgeführt wird.

## Revendications

1. Procédé de polymérisation en solution pour l'obtention d'un copolymère contenant de 30 à jusqu'à 91 % en moles d'unités propylène et étant complètement soluble dans un milieu de polymérisation, ledit milieu de polymérisation étant un mélange de monomères en présence d'un solvant carboné inerte, et dans une plage de concentration de 5 à 50 % en poids, comprenant la mise en contact dans des conditions de polymérisation à une température de polymérisation comprise entre 89 et 120 °C, de propylène et au moins de l'éthylène ou une alpha oléfine de formule CH₂=CHT dans laquelle T est un radical alkyle en C₂-C₂₀, en présence d'un système catalyseur pouvant être obtenu par mise en contact :
a) d'au moins un composé métallocène de formule (I) 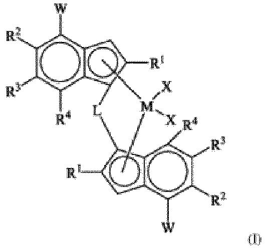 et
b) d'alumoxane ou un composé capable de former un cation de métallocène d'alkyle ;
où dans le composé métallocène de formule (I) :
M est un atome d'un métal de transition choisi parmi ceux appartenant au groupe 3, 4, ou aux groupes des lanthanides ou des actinides dans le Tableau Périodique des Eléments ;
X, identiques ou différents l'un de l'autre, est un atome d'hydrogène, un atome d'halogène, un groupe R, OR, OR'O, OSO₂CF₃, OCOR, SR, NR₂ ou PR₂, où R est un radical alkyle en C₁-C₄₀, alcényle en C₂-C₄₀, alcynyle en C₂-C₄₀, aryle en C₆-C₄₀, alkylaryle en C₇-C₄₀ ou arylalkyle en C₇-C₄₀, linéaire ou ramifié, cyclique ou acyclique ; contenant éventuellement des hétéroatomes appartenant aux groupes 13 à 17 du Tableau Périodique des Eléments ; et R' est un radical alkylidène en C₁-C₂₀, arylidène en C₆-C₂₀, alkylarylidène en C₇-C₂₀, ou arylalkylidène en C₇-C₂₀ ;
L est un groupe de pontage divalent choisi parmi les radicaux alkylidène en C₁-C₂₀, cycloalkylidène en C₃-C₂₀, arylidène en C₆-C₂₀, alkylarylidène en C₇-C₂₀, ou arylalkylidène en C₇-C₂₀, contenant éventuellement des hétéroatomes appartenant aux groupes 13 à 17 du Tableau Périodique des Eléments, ou bien il s'agit d'un radical silylidène contenant jusqu'à 5 atomes de silicium ;
R¹ est un radical hydrocarboné linéaire en C₁-C₄₀ contenant éventuellement des hétéroatomes appartenant aux groupes 13 à 17 du Tableau Périodique des Eléments ;
₂ et R_{3[MQA1]}, identiques ou différents l'un de l'autre, sont des radicaux hydrocarbonés en C₁-C₄₀ contenant éventuellement des hétéroatomes appartenant aux groupes 13 à 17 du Tableau Périodique des Eléments ou R₂ et R_{3 [MQA2]} font partie d'un cycle à 4 à 7 chaînons condensé sur le cycle benzène de la fraction indényle ; ledit cycle contenant éventuellement des hétéroatomes appartenant aux groupes 13 à 16 du Tableau Périodique des Eléments ; la valence de chaque atome formant ledit cycle étant remplie avec des radicaux R¹⁸, où R¹⁸, identiques ou différents les uns des autres, sont des atomes d'hydrogène ou des radicaux hydrocarbonés en C₁-C₄₀ ;
R⁴ est un atome d'hydrogène ou un radical hydrocarboné en C¹-C⁴⁰ _{[MQA3]} contenant éventuellement des hétéroatomes appartenant aux groupes 13 à 17 du Tableau Périodique des Eléments ;
W est un cycle aromatique à 5 ou 6 chaînons qui peut contenir des hétéroatomes appartenant aux groupes 13 à 16 du Tableau Périodique des Eléments ; la valence de chaque atome dudit cycle est substituée par un atome d'hydrogène ou elle peut éventuellement être substituée par des groupes R⁵, où R⁵, identiques ou différents les uns des autres, sont des radicaux hydrocarbonés en C₁-C₄₀ contenant éventuellement des hétéroatomes appartenant aux groupes 13 à 17 du Tableau Périodique des Eléments.

2. Procédé selon la revendication 1 dans lequel le système catalyseur comprend en outre c) un composé organo-aluminium.

3. Procédé selon les revendications 1 ou 2 dans lequel, dans le composé de formule (I), M est le zirconium, le titane ou le hafnium ; X est un atome d'hydrogène, un atome d'halogène, un groupe OR'O ou R ; L est Si(R¹¹)₂ où R¹¹ est un radical alkyle en C₁-C₄₀, alcényle en C₂-C₄₀, alcynyle en C₂-C₄₀, aryle en C₆-C₄₀, alkylaryle en C₇-C₄₀ ou arylalkyle en C₇-C₄₀, linéaire ou ramifié, cyclique ou acyclique ; R¹ est un radical alkyle en C₁-C₁₀.

4. Procédé selon l'une quelconque des revendications 1 à 3 dans lequel, dans le composé de formule (I), R² et R³ font partie d'un cycle à 5 à 6 chaînons condensé sur le cycle benzène de la fraction indényle ; ledit cycle étant substitué par des radicaux R¹⁸, où R¹⁸ est un atome d'hydrogène ou un radical alkyle en C₁-C₂₀ linéaire ou ramifié, R⁴ est un atome d'hydrogène, un radical alkyle en C₁-C₁₀ ou aryle en C₆-C₄₀.

5. Procédé selon l'une quelconque des revendications 1 à 4 dans lequel, dans le composé de formule (I), W est choisi dans le groupe comprenant les fractions suivantes de formule (Wa), (Wb) et (Wc) : 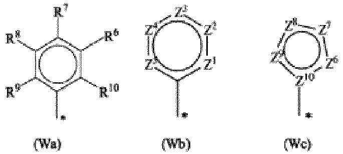 dans lesquelles le * représente le point au niveau duquel la fraction se lie à la fraction indényle du composé de formule (I) ;
R⁶, R⁷, R⁸, R⁹ et R¹⁰, identiques ou différents les uns des autres, sont des atomes d'hydrogène ou des radicaux hydrocarbonés en C₁-C₄₀ contenant éventuellement des hétéroatomes appartenant aux groupes 13 à 17 du Tableau Périodique des Eléments ;
Z¹ est un atome d'azote ou un groupe CR¹⁰ ; Z² est un atome d'azote ou un groupe CR⁶ ; Z³ est un atome d'azote ou un groupe CR⁷ ; Z⁴ est un atome d'azote ou un groupe CR⁸ ;
Z⁵ est un atome d'azote ou un groupe CR⁹ ; à condition que pas plus de 2 groupes parmi Z¹, Z², Z³, Z⁴ et Z⁵ soient des atomes d'azote ; Z⁶ est un atome d'oxygène, un atome de soufre, un groupe NR¹³ ou un groupe CR¹³ ; Z⁷ est un atome d'oxygène, un atome de soufre, un groupe NR¹⁴ ou un groupe CR¹⁴; Z⁸ est un atome d'oxygène, un atome de soufre, un groupe NR¹⁵ ou un groupe CR¹⁵ ; Z⁹ est un atome d'oxygène, un atome de soufre, un groupe NR¹⁶ ou un groupe CR¹⁶ ;
Z¹⁰ est un atome d'azote ou un atome de carbone qui se lie à la fraction indényle de la structure de formule (I) ; à condition que pas plus de 1 groupe parmi Z⁶, Z⁷, Z⁸, Z⁹ ou Z¹⁰ soit un atome de soufre, un atome d'oxygène ou un atome de groupe contenant de l'azote choisi parmi NR¹³, NR¹⁴, NR¹⁵, NR¹⁶, et un atome d'azote ;
R¹³, R¹⁴, R¹⁵ et R¹⁶, identiques ou différents les uns des autres, sont des atomes d'hydrogène ou des radicaux hydrocarbonés en C₁-C₄₀ contenant éventuellement des hétéroatomes appartenant aux groupes 13 à 17 du Tableau Périodique des Eléments ;

6. Procédé selon l'une quelconque des revendications 1 à 5 dans lequel le composé de formule (I) a la formule (IIa), (IIb) ou (IIc) : 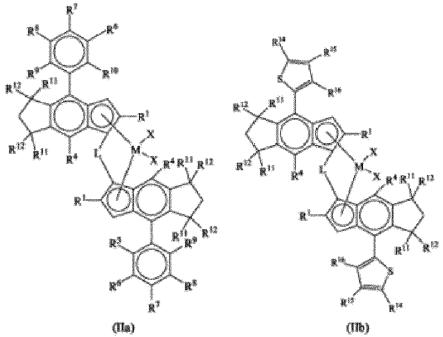 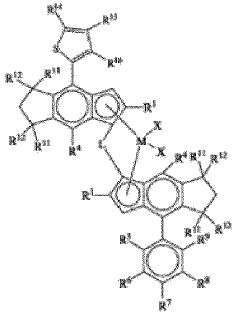 dans lesquelles M, L, X, R¹, R⁴, R¹⁰, R⁶, R⁷, R⁸, R¹⁴, R¹⁵ et R¹⁶ et R⁹ ont la signification indiquée dans les revendications 1 à 7 et R¹¹ et R¹², identiques ou différents l'un de l'autre, sont des atomes d'hydrogène ou des radicaux hydrocarbonés en C₁-C₄₀ contenant éventuellement des hétéroatomes appartenant aux groupes 13 à 17 du Tableau Périodique des Eléments.

7. Procédé selon l'une quelconque des revendications 1 à 6 effectué à une température allant de 60 °C à 200 °C.

8. Procédé selon l'une quelconque des revendications 1 à 7 dans lequel le milieu de polymérisation est un mélange de monomères liquides en présence d'un solvant hydrocarboné aliphatique ou cycloaliphatique.

9. Procédé selon l'une quelconque des revendications 1 à 8 dans lequel du propylène est copolymérisé avec de l'éthylène, du 1-butène ou du 1-hexène.

10. Procédé selon l'une quelconque des revendications 1 à 9 dans lequel du propylène, au moins de l'éthylène ou une alpha oléfine de formule CH₂=CHT dans laquelle T est un radical alkyle en C₂-C₂₀ et un diène non conjugué, sont mis en contact dans des conditions de polymérisation en présence d'un système catalyseur décrit dans la revendication 1.

11. Procédé selon l'une quelconque des revendications 1 à 10 dans lequel ledit procédé est effectué en présence d'hydrogène.
